# EUROPEAN PATENT APPLICATION

(11) **EP 4 372 048 A1**
(43) Date of publication of application: **22.05.2024**
(21) Application number: 22842143.4
(22) Date of filing: 13.07.2022
(51) Int. Cl.: C08L 27/12, C08K 7/04

(54) **RESIN COMPOSITION, METHOD FOR PRODUCING RESIN COMPOSITION, AND MOLDED ARTICLE**

(30) Priority: 15.07.2021 JP 2021116990
(71) Applicant: AGC INC., Chiyoda-ku, Tokyo 1008405 (JP)
(72) Inventor: OZAWA Norio, Tokyo 100-8405 (JP); SASAKI Toru, Tokyo 100-8405 (JP); YODOGAWA Masahide, Tokyo 100-8405 (JP)
(74) Representative: Müller-Boré & Partner Patentanwälte PartG mbB
(86) International application number: PCT/JP2022/027549
(87) International publication number: WO 2023/286801

(57) **Abstract**

To provide a resin composition, from which a molded body excellent in mechanical properties and having high elasticity, can be obtained, and the molded body obtained from such a resin composition.

A resin composition comprising a melt-moldable fluororesin and inorganic fibers, wherein the ratio of the fluororesin to the sum of the fluororesin and the inorganic fibers is from 60 to 95 mass%, the inorganic fibers are inorganic fibers, of which at least a portion of the surface is treated with a sizing agent, and the mass loss ratio after heating the inorganic fibers at 400°C for 60 minutes, is at most 3%; a method for producing the resin composition; and a molded body formed from the resin composition.

## Description

### TECHNICAL FIELD

The present invention relates to a resin composition, a method for producing the resin composition, and a molded body of the resin composition.

### BACKGROUND ART

Fluororesins are excellent in heat resistance, flame resistance, chemical resistance, weather resistance, non-adhesiveness, low friction properties and low dielectric properties and thus are used in a wide range of applications such as corrosion-resistant piping materials for chemical plants, vinyl house materials for agriculture, release coating materials for kitchen utensils, and coating materials for electric wires. On the other hand, fluororesins may sometimes be inferior in strength properties such as tensile strength and flexural strength as compared to general engineering plastics.

In order to improve the strength properties of fluororesins, fillers are sometimes added to fluororesins (e.g. Patent Document 1). The resin composition described in Patent Document 1 is characterized in that it comprises a crystalline resin having a melting point of at least 290°C, a graphite yarn (A) with a c-axis crystallite size of at most 30.0 Å and a graphite yarn (B) with a c-axis crystallite size exceeding 100.0 Å.

### PRIOR ART DOCUMENT

### PATENT DOCUMENT

Patent Document 1: JP-A-2019-203125

### DISCLOSURE OF INVENTION

### TECHNICAL PROBLEM

However, in the resin composition of Document 1, the strength properties of the molded body become lower when the temperature at the time of melt molding becomes higher, and for some applications, the mechanical properties become inadequate. In addition, high elasticity may sometimes be required for a molded body of a fluororesin.

The present invention provides a resin composition from which a molded body excellent in mechanical properties and having high elasticity, can be obtained, and a molded body obtained from such a resin composition.

### SOLUTION TO THE PROBLEM

The present invention encompasses the following embodiments.
[1] A resin composition comprising a melt-moldable fluororesin and inorganic fibers, wherein the ratio of the fluororesin to the sum of the fluororesin and the inorganic fibers is from 60 to 95 mass%; the inorganic fibers are inorganic fibers, of which at least a portion of the surface is treated with a sizing agent; and the mass loss ratio of the inorganic fibers, as calculated by the following method, is at most 3%:
   Method for calculating the mass loss ratio: The inorganic fibers are heated at 400°C for 60 minutes in the presence of air, and the mass loss ratio is calculated based on the following formula (I): Mass loss ratio (%) = ((mass [g] of inorganic fibers before heating) - (mass [g] of inorganic fibers after heating)) / (mass [g] of inorganic fibers before heating) × 100
[2] The resin composition according to [1], wherein the composition further contains components other than the fluororesin and the inorganic fibers, and the content of such components is at most 20 mass% to the resin composition.
[3] The resin composition according to [1] or [2], wherein the inorganic fibers are glass fibers or carbon fibers.
[4] The resin composition according to any one of [1] to [3], wherein the average fiber length of the inorganic fibers is from 100 µm to 30 mm.
[5] The resin composition according to any one of [1] to [4], wherein the fluororesin has functional groups selected from the group consisting of carbonyl group-containing groups, hydroxy groups, epoxy groups, amide groups, amino groups and isocyanate groups.
[6] The resin composition according to any one of [1] to [5], wherein the fluororesin is a polymer having units based on tetrafluoroethylene, a copolymer having units based on tetrafluoroethylene and units based on ethylene, a copolymer having units based on chlorotrifluoroethylene and units based on ethylene, a copolymer having units based on tetrafluoroethylene and units based on hexafluoropropylene, a copolymer having units based on tetrafluoroethylene and units based on a compound represented by the following formula (1), or a copolymer having units based on tetrafluoroethylene, units based on a compound represented by the following formula (2) and units based on ethylene:

   CF₂=CFOR^{f1} (1)

   CH₂=CX¹(CF₂)ₚX² (2)

   where in the formula (1), R^{f1} is a C₁₋₁₀ perfluoroalkyl group which may contain an etheric oxygen atom between carbon atoms, and in the formula (2), X¹ is a hydrogen atom or a fluorine atom, p is an integer of from 2 to 10, and X² is a hydrogen atom or a fluorine atom.
[7] The resin composition according to [6], wherein the fluororesin is a copolymer having units based on tetrafluoroethylene and units based on ethylene, a copolymer having units based on tetrafluoroethylene and units based on a compound represented by the above formula (1), or a copolymer having units based on tetrafluoroethylene, units based on a compound represented by the above formula (2) and units based on ethylene.
[8] The resin composition according to [6] or [7], wherein the fluororesin is a polymer having units based on a monomer having a functional group selected from the group consisting of a carbonyl group-containing group, a hydroxy group, an epoxy group, an amide group, an amino group and an isocyanate group.
[9] The resin composition according to [8], wherein the polymer having units based on a monomer having the above functional group is a polymer having units based on a monomer having a carboxy group, an acid anhydride group, a hydroxy group or an epoxy group.
[10] A method for producing the resin composition as defined in any one of [1] to [9], which comprises melt-kneading the fluororesin and the inorganic fibers.
[11] A molded body obtainable by molding the resin composition as defined in any one of [1] to [9].

### ADVANTAGEOUS EFFECTS OF INVENTION

According to the present invention, it is possible to provide a resin composition, from which a molded body excellent in mechanical properties and having high elasticity can be obtained; and from such a resin composition, a molded body excellent in mechanical properties and having high elasticity can be obtained.

### DESCRIPTION OF EMBODIMENTS

The meanings of the following terms in this specification are as follows.

A compound represented by the formula (n) is referred to as a "compound (n)". Here, n is a natural number.

A "monomer" means a compound having a polymerizable carbon-carbon double bond.

A "unit based on a monomer" is a generic term for an atomic group formed directly by polymerization of a single monomer molecule and an atomic group obtainable by chemical conversion of a portion of the atomic group after polymerization. Units based on a monomer may be simply referred to also as "monomer units".

"Melt-moldable" means to show melt flowability.

The term "showing melt flowability" means that under a condition of a load of 49 N, at a temperature higher by at least 20°C than the melting point of the resin, there exists a temperature at which the melt flow rate becomes to be from 0.1 to 1,000 g/10 min.

The "melting point" is the temperature corresponding to the maximum value of the melting peak measured by the differential scanning calorimetry (DSC) method.

The "melt flow rate" is the melt mass flow rate (MFR) specified in JIS K 7210:1999 (ISO 1133:1997).

### <Resin composition>

The resin composition of the present invention comprises a melt-moldable fluororesin and inorganic fibers. The resin composition may further contain components other than the fluororesin and the inorganic fibers (hereinafter referred to also as "other components") to such an extent that the effects of the invention are not impaired.

### (Fluororesin)

A fluororesin is a fluorinated polymer having fluorinated monomer units, and is not particularly limited, so long as it can be melt-molded.

The fluorinated monomer is not particularly limited so long as it is a fluorinated compound having one polymerizable carbon-carbon double bond. As the fluorinated monomer, for example, a fluoro-olefin, a fluorinated compound having a ring structure, compound (1) (hereinafter referred to also as "PAVE"), compound (2) (hereinafter referred to also as "FAE"), compound (3), compound (4), and compound (5) may be mentioned. However, the fluorinated monomer is not limited to these exemplifications. Further, as the fluorinated monomer, two or more types may be used in combination.

CF₂=CFOR^{f1} (1)

CH₂=CX¹(CF₂ )ₚX² (2)

CF₂=CFOR^{f2}SO₂X³ (3)

CF₂=CFOR^{f3}CO₂X⁴ (4)

CF₂=CF(CF₂ )_{q}OCF=CF₂ (5)

where,
in the formula (1), R^{f1} is a C₁₋₁₀ perfluoroalkyl group which may contain an etheric oxygen atom between carbon atoms,
in the formula (2), X¹ is a hydrogen atom or a fluorine atom, p is an integer from 2 to 10, and X² is a hydrogen atom or a fluorine atom,
in the formula (3), R^{f2} is a C₁₋₁₀ perfluoroalkylene group which may contain an etheric oxygen atom between carbon atoms, and X³ is a halogen atom or a hydroxyl group, in the formula (4), R^{f3} is a C₁₋₁₀ perfluoroalkylene group which may contain an etheric oxygen atom between carbon atoms, and X⁴ is a hydrogen atom or a C₁₋₃ alkyl group, and in the formula (5), q is 1 or 2.

Here, as the fluorinated compound having a ring structure, for example, perfluoro(2,2-dimethyl-1,3-dioxol), 2,2,4-trifluoro-5-trifluoromethoxy-1 ,3-dioxol, perfluoro(2-methylene-4-methyl-1,3-dioxolane), etc. may be mentioned.

As the fluorinated monomer, from the viewpoint of mechanical properties, a fluoro-olefin, PAVE and FAE are preferred, and a fluoro-olefin and PAVE are more preferred.

As the fluoro-olefin, for example, tetrafluoroethylene (hereinafter referred to also as "TFE"), vinyl fluoride, vinylidene fluoride (hereinafter referred to also as "VdF"), trifluoroethylene, chlorotrifluoroethylene (hereinafter referred to also as "CTFE"), hexafluoropropylene (hereinafter referred to also as "HFP"), hexafluoroisobutylene, etc. may be mentioned. Among them, from the viewpoint of moldability and mechanical properties, TFE and HFP are preferred, and TFE is more preferred.

As PAVE, for example, CF₂=CFOCF₂CF₃, CF₂=CFOCF₂CF₂CF₃, CF₂=CFOCF₂CF₂CF₂CF₃, CF₂=CFO(CF₂)₆F, etc. may be mentioned. Among them, from the viewpoint of mechanical properties, CF₂=CFOCF₂CF₂CF₃ (hereinafter referred to also as "PPVE") is preferred.

As FAE, for example, CH₂= CF(CF₂)₂F, CH₂=CF(CF₂)₃F, CH₂=CF(CF₂)₄F, CH₂=CF(CF₂)₅F, CH₂=CF(CF₂)₆F, CH₂=CF(CF₂)₂H, CH₂=CF(CF₂)₃H, CH₂=CF(CF₂)₄H, CH₂=CF(CF₂)₅H, CH₂=CF(CF₂)₆H, CH₂=CH(CF₂)₂F (hereafter referred to also as "PFEE"), CH₂=CH(CF₂)₃F, CH₂=CH(CF₂)₄F (hereinafter referred to also as "PFBE"), CH₂=CH(CF₂)₃F, CH₂=CH(CF₂)₆F, CH₂=CH(CF₂)₂H, CH₂=CH(CF₂)₃H, CH₂=CH(CF₂)₄H, CH₂=CH(CF₂)₅H, CH₂= CH(CF₂)₆H, etc. may be mentioned.

As FAE, compound (2-1) is preferred.

CH₂=CH(CF₂)ₚ₁X² (2-1)

where in the formula (2-1), p1 is from 2 to 6, preferably from 2 to 4, and X² is a hydrogen atom or a fluorine atom.

As compound (2-1), PFEE, CH₂=CH(CF₂)₃F, PFBE, CH₂=CF(CF₂)₃H and CH₂=CF(CF₂)₄H are preferred, and PFBE and PFEE are more preferred.

In addition to the fluorinated monomer units, the fluororesin may further have non-fluorinated monomer units. The non-fluorinated monomer is not particularly limited so long as it is a monomer which does not have fluorine atoms. For example, olefins such as ethylene, propylene and 1-butene, vinyl esters such as vinyl acetate, and monomers having the functional group f as described later, may be mentioned.

When a fluororesin has non-fluorinated monomer units, as the non-fluorinated monomer, two or more types may be used in combination. As the non-fluorinated monomer, from the viewpoint of excellent mechanical properties of a molded body, etc., ethylene, propylene and 1-butene are preferred, and ethylene is particularly preferred.

The fluororesin may be a monopolymer having fluorinated monomer units, a copolymer having at least two types of fluorinated monomer units, or a copolymer having at least one type of fluorinated monomer units and at least one type of non-fluorinated monomer units.

Here, the resin composition of the present invention may contain at least two types of such a monopolymer or copolymer as the fluororesin.

In a case where the fluororesin is a copolymer having fluorinated monomer units and non-fluorinated monomer units, the ratio of fluorinated monomer units is preferably from 40.0 to 99.5 mol%, more preferably from 45 to 99 mol%, to the sum of the fluorinated monomer units and the non-fluorinated monomer units. When the ratio of the fluorinated monomer units is at least the lower limit value in the above range, the fluororesin will be further excellent in flame resistance, chemical resistance and moldability. When the ratio of the fluorinated monomer units is at most the upper limit value in the above range, the fluororesin will be excellent in mechanical properties, and it will be easy to obtain a molded body having high elasticity.

As the fluororesin being a monopolymer, for example, polytetrafluoroethylene, polyvinylidene fluoride, polychlorotrifluoroethylene, polyhexafluoropropylene, etc. may be mentioned.

As the fluororesin being a copolymer, for example, a copolymer having TFE units and ethylene units, a copolymer having CTFE units and ethylene units, a copolymer having TFE units and HFP units, a copolymer having TFE units and PAVE units, and a copolymer having TFE units, FAE units and ethylene units, may be mentioned.

Among them, from the viewpoint of mechanical properties and high elasticity, a copolymer having TFE units and ethylene units, a copolymer having TFE units, FAE units and ethylene units, and a copolymer having TFE units and PAVE units are particularly preferred.

Further, the fluororesin is not limited to these exemplifications so long as it can be melt-molded and may be various other monopolymers or copolymers.

In a case where the fluororesin is a copolymer having TFE units and ethylene units, to all monomer units of the copolymer, TFE units are preferably from 30 to 70 mol%, more preferably from 40 to 60 mol%.

In a case where the fluororesin is a copolymer having TFE units, FAE units and ethylene units, to all monomer units of the copolymer, TFE units are preferably from 40 to 64 mol%, FAE units are preferably from 1 to 5 mol%, and ethylene units are preferably from 35 to 59 mol%, and TFE units are more preferably from 45 to 59 mol%, FAE units are more preferably from 1 to 4 mol %, and ethylene units are more preferably from 40 to 54 mol%.

In a case where the fluororesin is a copolymer having TFE units and PAVE units, to all monomer units of the copolymer, TFE units are preferably from 80.0 to 99.5 mol%, more preferably from 90 to 95 mol%.

The melting point of the fluororesin is preferably from 100 to 325°C, more preferably from 150 to 260°C. When the melting point of the fluororesin is at least the lower limit value in the above range, the molded body will be excellent in heat resistance. When the melting point of the fluororesin is at most the upper limit value in the above range, it will be possible to use a general-purpose equipment to produce the molded body. Further, it will be easy to obtain a molded body with excellent mechanical properties. Further, in a case where further improvement of heat resistance is required, the melting point of the fluororesin is preferably from 260 to 330°C, more preferably from 270 to 325°C.

The melt flow rate of the fluororesin is preferably from 0.1 to 100 g/10 min., more preferably from 0.5 to 80 g/10 min., further preferably from 1 to 50 g/10 min. When the melt flow rate is at least the lower limit value in the above range, the fluororesin will be excellent in moldability. When the melt flow rate is at most the upper limit value in the above range, it will be easy to obtain a molded body excellent in mechanical properties.

As the fluororesin, a fluororesin (hereinafter referred to as "fluororesin A") having functional groups (hereinafter referred to as "functional groups f") selected from the group consisting of carbonyl group-containing groups, hydroxy groups, epoxy groups, amide groups, amino groups, and isocyanate groups, is preferred. Fluororesin A may have two or more types of functional groups f. Here, the resin composition of the present invention may contain a fluororesin A and a fluororesin not having a functional group f.

The fluororesin A has adhesive functional groups f and thus is excellent in adhesiveness with inorganic fibers. As a result, it will be easier to obtain a molded body more excellent in mechanical properties. Further, it will be easier to obtain a molded body excellent in impact resistance.

The functional group f is, from the viewpoint of adhesion to the inorganic fibers, preferably present in at least one of the terminal group of the main chain and the pendant group of the main chain of the fluororesin A.

The fluororesin A preferably has, from the viewpoint of adhesion to the inorganic fibers, at least a carbonyl group-containing group as the functional group f.

As the carbonyl group-containing group, for example, a group having a carbonyl group between carbon atoms of a hydrocarbon group, a carbonate group, a carboxy group, a haloformyl group, an alkoxycarbonyl group, an acid anhydride group, etc. may be mentioned.

As the hydrocarbon group in the group having a carbonyl group between carbon atoms of a hydrocarbon group, for example, a C₂₋₈ alkylene group may be mentioned. Here, the number of carbon atoms in the alkylene group is the number of carbon atoms in a state of not containing carbon constituting the carbonyl group. The alkylene group may be linear or branched.

The haloformyl group is represented by -C(=O)-X (where X is a halogen atom). As the halogen atom in the haloformyl group, a fluorine atom, a chlorine atom, etc. may be mentioned, and a fluorine atom is preferred. That is, as the haloformyl group, a fluoroformyl group (referred to also as a carbonyl fluoride group) is preferred.

The alkoxy group in the alkoxycarbonyl group may be linear or branched. As the alkoxy group in the alkoxycarbonyl group, a C₁₋₈ alkoxy group is preferred, and a methoxy group and an ethoxy group are particularly preferred.

The content of functional groups f in the fluororesin A is, to 1×10⁶ carbon atoms in the main chain of fluororesin A, preferably from 10 to 60,000, more preferably from 100 to 50,000, further preferably from 100 to 10,000, particularly preferably from 300 to 5,000. When the content of functional groups f is at least the lower limit value in the above range, adhesion to the inorganic fibers will be remarkably excellent. When the content of functional groups f is at most the upper limit value in the above range, adhesion to the inorganic fibers will be excellent even if the temperature at the time of melt molding is made to be low.

The content of functional groups f can be measured by a method such as nuclear magnetic resonance (NMR) analysis, infrared absorption spectrum analysis or the like. For example, by using a method of e.g. the infrared absorption spectrum analysis as described in JP-A-2007-314720, the ratio (mol%) of units having functional groups f in all units constituting the fluororesin A is obtained, and from the ratio (mol%) of the units, the content of functional groups f can be calculated.

When a fluororesin A having a relatively low melting point is used, the temperature at the time of melt molding can be set to be low, whereby adhesion to the inorganic fibers will be excellent. Therefore, from the viewpoint of adhesion to the inorganic fibers, the melting point of the fluororesin A is preferably from 120 to 220°C, more preferably from 120 to 200°C.

When a fluororesin A having a relatively high melting point is used, it will be easy to obtain a molded body equipped with high heat resistance. Therefore, from the viewpoint of heat resistance, the melting point of the fluororesin A is preferably from 260 to 330°C, more preferably from 280 to 325°C.

The melting point of the fluororesin A can be adjusted by the types and ratios of units constituting the fluororesin A, the molecular weight of the fluororesin A, etc. For example, the higher the ratio of units u1 described later, the higher the melting point tends to be.

As the fluororesin A, for example, the following ones may be mentioned depending on differences in the production method.

Fluororesin A1: A fluorinated polymer (hereinafter referred to also as "fluorinated polymer A1") having functional groups f derived from at least one type selected from the group consisting of the monomer, the chain transfer agent and the polymerization initiator used at the time of the production of the polymer.

Fluororesin A2: A fluororesin in which functional groups f are introduced into a fluororesin which does not have a functional group f, by surface treatment such as corona discharge treatment or plasma treatment.

Fluororesin A3: A fluororesin obtained by graft polymerization of a monomer having a functional group f onto a fluororesin which does not have a functional group f.

As the fluororesin A, the fluorinated polymer A1 is preferred for the following reasons.

In the fluorinated polymer A1, a functional group f is present in at least one of the terminal group of the main chain and the pendant group of the main chain of the fluorinated polymer A1, whereby adhesion to the inorganic fibers is remarkably excellent.

The functional groups f in the fluororesin A2 are formed by surface treatment, whereby they are unstable and tend to disappear as the time passes.

In a case where the functional groups f in the fluorinated polymer A1 are derived from the monomer used in the production of the fluorinated polymer A1, the fluorinated polymer A1 can be produced by the following method (1). In this case, the functional groups f are present in the monomer units formed by polymerization of the monomer during the production.

Method (1): At the time of producing the fluorinated polymer A1 by polymerization of a fluorinated monomer, a monomer having a functional group f is copolymerized.

In a case where the functional groups f in the fluorinated polymer A1 are derived from the chain transfer agent used in the production of the fluorinated polymer A1, the fluorinated polymer A1 can be produced by the following method (2). In this case, the functional groups f are present as terminal groups of the main chain of the fluorinated polymer A1.

Method (2): A fluorinated polymer A1 is produced by polymerization of a fluorinated monomer in the presence of a chain transfer agent having a functional group f.

As the chain transfer agent having a functional group f, acetic acid, acetic anhydride, methyl acetate, ethylene glycol, propylene glycol, etc. may be mentioned.

In a case where the functional groups f in the fluorinated polymer A1 are derived from a polymerization initiator used to produce the fluorinated polymer A1, the fluorinated polymer A1 can be produced by the following method (3). In this case, the functional groups f are present as terminal groups of the main chain of the fluorinated polymer A1.

Method (3): A fluorinated polymer A1 is produced by polymerization of a fluorinated monomer in the presence of a polymerization initiator such as a radical polymerization initiator having a functional group f.

As the radical polymerization initiator having a functional group f, di-n-propylperoxydicarbonate, diisopropylperoxycarbonate, tert-butylperoxyisopropyl carbonate, bis(4-tert-butylcyclohexyl) peroxydicarbonate, di-2-ethylhexylperoxydicarbonate, etc. may be mentioned.

In a case where the functional groups f in the fluorinated polymer A1 are derived from at least two types among a monomer, a chain transfer agent and a polymerization initiator used in the production of the fluorinated polymer A1, the fluorinated polymer A1 can be produced by using at least two methods among the above methods (1) to (3) in combination.

As the fluorinated polymer A1, from such a viewpoint that the content of the functional groups f can be easily controlled and the adhesiveness to the inorganic fibers can be easily adjusted, a fluoropolymer A1 having functional groups f derived from a monomer, produced by the method (1), is preferred.

As the monomer having a functional group f, a monomer having a carboxy group, a monomer having an acid anhydride group, a monomer having a hydroxy group and a monomer having an epoxy group are preferred. Further, as the monomer having such a functional group f, a non-fluorinated monomer is preferred.

As the monomer having a carboxy group, for example, maleic acid, itaconic acid, citraconic acid, undecylenic acid, etc. may be mentioned.

As the monomer having an acid anhydride group, itaconic anhydride (hereinafter referred to also as "IAH"), citraconic anhydride (hereinafter referred to also as "CAH"), 5-norbornene-2,3-dicarboxylic anhydride (hereinafter referred to also as "NAH"), maleic anhydride, etc. may be mentioned.

As the monomer having a hydroxy group, hydroxybutyl vinyl ether, etc. may be mentioned, and as the monomer having an epoxy group, glycidyl vinyl ether, etc. may be mentioned.

However, the monomer having a functional group f is not limited to these exemplifications. Further, two or more types of the monomer having a functional group f may be used in combination.

As the fluorinated polymer A1 having functional groups f derived from a monomer, from the viewpoint that the adhesiveness to the inorganic fibers is remarkably superior, the following fluorinated polymer A11 is particularly preferred.

Fluorinated polymer A11: A fluorinated copolymer having units (hereinafter referred to also as "units u1") based on TFE or CTFE, units (hereinafter referred to also as "units u2") based on a cyclic hydrocarbon monomer having an acid anhydride group (hereinafter referred to also as "acid anhydride group-containing cyclic hydrocarbon monomer units"), and units (hereinafter referred to also as "unit u3") based on a fluorinated monomer (but, excluding TFE and CTFE).

Here, the acid anhydride group in unit u2 corresponds to a functional group f.

As the acid anhydride group-containing cyclic hydrocarbon monomer constituting units u2, IAH, CAH, NAH, maleic anhydride, etc. may be mentioned. As the acid anhydride group-containing cyclic hydrocarbon monomer, two or more types may be used in combination.

As the acid anhydride group-containing cyclic hydrocarbon monomer, IAH, CAH, and NAH are preferred. When IAH, CAH or NAH is used, the fluorinated copolymer A11 having acid anhydride groups can be easily produced without using a special polymerization method (see JP-A-H11-193312), which is required when maleic anhydride is used.

As the acid anhydride group-containing cyclic hydrocarbon monomer, from such a viewpoint that the adhesiveness to the inorganic fibers is remarkably superior, IAH and NAH are preferred.

As the fluorinated monomer constituting units u3, for example, a fluoro-olefin (but excluding TFE and CTFE), a fluorinated compound having a ring structure, PAVE, FAE, compound (3), compound (4), compound (5), etc. may be mentioned.

With respect to the fluoro-olefin, the fluorinated compound having a ring structure, PAVE, FAE, compound (3), compound (4) and compound (5) as the fluorinated monomer constituting units u3, the same compounds as ones exemplified above as the fluorinated monomer constituting the fluororesin may be mentioned. The preferred embodiments are also the same.

As the fluorinated monomer constituting units u3, from the viewpoint of mechanical properties, high elasticity and moldability, PAVE and FAE are preferred.

The preferred ratios of the respective units of the fluorinated polymer A11 are as follows.

The ratio of units u1 to the sum of units u1, units u2 and units u3 is preferably from 90 to 99.89 mol%, more preferably from 95 to 99.47 mol%, further preferably from 96 to 98.95 mol%.

The ratio of units u2 to the sum of units u1, units u2 and units u3 is preferably from 0.01 to 3 mol%, more preferably from 0.03 to 2 mol%, further preferably from 0.05 to 1 mol%.

The ratio of units u3 to the sum of units u1, units u2 and units u3 is preferably from 0.1 to 9.99 mol%, more preferably from 0.5 to 9.97 mol%, further preferably from 1 to 9.95 mol%.

The fluorinated polymer A11 may contain, in addition to units u1 to u3, units (hereinafter referred to also as "units u4") based on a non-fluorinated monomer (but excluding an acid anhydride group-containing cyclic hydrocarbon monomer).

In a case where units u4 are ethylene units, the preferred ratios of the respective units are as follows.

The ratio of units u1 to the sum of units u1, units u2, units u3 and units u4 is preferably from 25 to 80 mol%, more preferably from 40 to 65 mol%, further preferably from 45 to 63 mol%.

The ratio of units u2 to the sum of units u1, units u2, units u3 and units u4 is preferably from 0.01 to 5 mol%, more preferably from 0.03 to 3 mol%, further preferably from 0.05 to 1 mol%.

The ratio of units u3 to the sum of units u1, units u2, units u3 and units u4 is preferably from 0.2 to 20 mol%, more preferably from 0.5 to 15 mol%, further preferably from 1 to 12 mol%.

The ratio of units u4, i.e. ethylene units, to the sum of units u1, units u2, units u3 and units u4 is preferably from 20 to 75 mol%, more preferably from 35 to 50 mol%, further preferably from 37 to 55 mol%.

When the ratio of units u1 is within the above-mentioned range, the flame resistance, chemical resistance, etc. of the molded body will be remarkably superior.

When the ratio of units u2 is within the above-mentioned range, the amount of acid anhydride groups will be appropriate and adhesion to the inorganic fibers will be remarkably superior.

When the ratio of units u3 is within the above-mentioned range, the moldability will be remarkably superior.

The ratios of the respective units can be calculated by melt NMR analysis, fluorine content analysis, infrared absorption spectrum analysis, etc. of the fluorinated polymer A11.

There may be a case where in the fluorinated polymer A11, some of acid anhydride groups in units u2 undergo hydrolysis, and as a result, units based on a dicarboxylic acid (itaconic acid, citraconic acid, 5-norbornene-2,3-dicarboxylic acid, maleic acid, etc.) corresponding to the acid anhydride group-containing cyclic hydrocarbon monomer will be contained. In such a case, the ratio of units based on the dicarboxylic acid corresponding to the acid anhydride group-containing cyclic hydrocarbon monomer shall be included in the ratio of units u2.

As the fluorinated polymer A11, a copolymer having TFE units, NAH units and PPVE units; a copolymer having TFE units, IAH units and PPVE units; a copolymer having TFE units, CAH units and PPVE units; a copolymer having TFE units, IAH units and HFP units; a copolymer having TFE units, CAH units and HFP units; a copolymer having TFE units, IAH units, PFBE units and ethylene units; a copolymer having TFE units, CAH units, PFBE units and ethylene units; a copolymer having TFE units, IAH units, PFEE units and ethylene units; a copolymer having TFE units, CAH units, PFEE units and ethylene units; a copolymer having TFE units, IAH units, HFP units, PFBE units and ethylene units, etc. may be mentioned.

The fluororesin can be produced by a conventional method. For example, the fluororesin can be produced by polymerization of a monomer component containing at least a fluorinated monomer. The monomer component may further contain a non-fluorinated monomer and a monomer having a functional group f as the case requires.

As the polymerization method, a bulk polymerization method, a solution polymerization method using an organic solvent (such as a fluorinated hydrocarbon, a chlorinated hydrocarbon, a fluorinated and chlorinated hydrocarbon, an alcohol, a hydrocarbon, etc.), a suspension polymerization method using an aqueous medium and an appropriate organic solvent as the case requires, and an emulsion polymerization method using an aqueous medium and an emulsifier, may be mentioned, and the solution polymerization method is preferred.

### (Inorganic fibers)

The inorganic fibers to be contained in the resin composition of the present invention have at least a portion of their surface treated with a sizing agent. Therefore, the inorganic fibers have such a merit that they can be easily mixed with the fluororesin at the time of the production of the resin composition. The sizing treatment may be applied to the entire surface of the inorganic fibers or to a portion of the surface of the inorganic fibers.

The sizing agent contains a resin such as a thermosetting resin or a thermoplastic resin and may optionally contain components such as a curing agent, a solvent, a dispersant and a silane coupling agent.

The resin contained in the sizing agent is not particularly limited. From the viewpoint of heat resistance, a phenol resin, a melamine resin, a bismaleimide resin, a unsaturated polyester resin, an epoxy resin, a polyimide resin, a fluororesin, etc. may be mentioned. Among them, a bismaleimide resin, an epoxy resin, a polyimide resin and a fluororesin are preferred, and a polyimide resin is more preferred.

In a case where the resin contained in the sizing agent is a curable resin, such as a thermosetting resin, the inorganic fibers treated with the sizing agent usually contain a cured product of the curable resin on their sizing-treated surface. In a case where the resin contained in the sizing agent is a thermoplastic resin, the inorganic fibers treated with the sizing agent usually contain the thermoplastic resin on their sizing-treated surface. The mass loss by the heat treatment of the inorganic fibers is considered to be mainly due to the disappearance of the cured product of the above curable resin or the thermoplastic resin on the surface of the inorganic fibers.

The mass loss ratio of inorganic fibers calculated by the following method is at most 3%, preferably at most 2.5%, more preferably at most 2.0%. When the mass loss ratio is at most the upper limit value in the above range, the inorganic fibers will be excellent in heat resistance and their mechanical properties will be good. The smaller the mass loss ratio, the more desirable it is, and the lower limit value of the mass loss ratio is not particularly limited.

Method for calculation of mass loss ratio: The inorganic fibers are heated at 400°C for 60 minutes in the presence of air, and the mass loss ratio is calculated based on the following formula (I): (Mass loss ratio) = ((mass [g] of inorganic fibers before heating) - (mass [g] of inorganic fibers after heating)) / (mass [g] of inorganic fibers before heating) × 100

As the inorganic fibers, for example, carbon fibers, graphite fibers, glass fibers, silicon carbide fibers, silicon nitride fibers, alumina fibers, silicon carbide fibers, boron fibers, metal fibers, etc. may be mentioned. As the metal fibers, for example, aluminum fibers, brass fibers, stainless steel fibers, etc. may be mentioned.

Among them, as the inorganic fibers, from the viewpoint of mechanical properties, glass fibers and carbon fibers are preferred.

As the inorganic fibers, two or more types may be used in combination.

The type of carbon fibers is not particularly limited. For example, pitch-type carbon fibers and polyacrylonitrile-type carbon fibers (PAN-type carbon fibers) may be mentioned. The pitch-type carbon fibers may be isotropic or anisotropic carbon fibers. As others, carbon fibers described in WO2013/129169 may also be used. Further, as the production method for carbon fibers, a method described in paragraphs 0028 to 0033 of WO2013/129169 may also be used.

The type of the glass fibers is not particularly limited. For example, flat glass fibers with a deformed cross section may be used, or glass fibers with a low dielectric constant may be used from the viewpoint of electrical properties.

The form of the inorganic fibers is not particularly limited and may be short fibers, such as milled fibers or chopped fibers, or may be long fibers. Further, the cross-sectional shape of the inorganic fibers is also not particularly limited. The cross-section of the inorganic fibers may be circular, oval, polygonal, or irregularly shaped. The form and cross-sectional shape of the inorganic fibers can be suitably selected depending on the desired physical properties.

The average fiber length of the inorganic fibers is preferably from 100 µm to 30 mm, more preferably from 150 µm to 25 mm, further preferably from 200 µm to 20 mm. When the average fiber length of the inorganic fibers is at least the lower limit value in the above range, it will be easier to obtain a molded body excellent in mechanical properties. When the average fiber length of the inorganic fibers is at most the upper limit value in the above range, it will be easier to ensure flowability at the time of molding.

The diameter of the inorganic fibers is not particularly limited. The diameter of the inorganic fibers is preferably from 1 to 15 µm, more preferably from 3 to 13 µm, particularly preferably from 5 to 10 µm. When the diameter of the inorganic fibers is at least the lower limit value in the above range, it will be easy to obtain a molded body excellent in mechanical properties. When the diameter of the inorganic fibers is at most the upper limit value in the above range, it will be easy to improve the dispersibility of the inorganic fibers.

The aspect ratio of fiber length to the diameter of the inorganic fibers is not particularly limited. As the aspect ratio, from 2 to 1,500 is preferred; from 5 to 1,200 is more preferred; and from 10 to 100 is particularly preferred. When the aspect ratio of fiber length to the diameter of the inorganic fibers is at least the lower limit value in the above range, it will be easy to obtain a molded body excellent in mechanical properties. When the aspect ratio of the fiber length to the diameter of the inorganic fibers is at most the upper limit value in the above range, it will be easy to improve the dispersibility of the inorganic fibers.

### (Other components)

As other components, for example, an inorganic filler (but excluding inorganic fibers), a metallic soap, a surfactant, a UV absorber, a lubricant, a silane coupling agent, etc. may be mentioned, but other components are not limited to these.

### (Ratios of the respective components)

The ratio of the fluororesin to the sum of the fluororesin and the inorganic fibers in the resin composition of the present invention is from 60 to 95 mass%, preferably from 65 to 90 mass%, more preferably from 70 to 85 mass%. When the ratio of the fluororesin is at least the lower limit value in the above range, flame retardancy and chemical resistance will be excellent. When the ratio of the fluororesin is at most the upper limit value in the above range, a molded body excellent in mechanical properties and having high elasticity will be obtained.

In a case where the resin composition of the present invention contains other components, when their ratio is at least 1 mass% to the resin composition, it will be easy to impart new properties derived from such other components. The ratio of such other components to the resin composition is preferably at most 20 mass%, more preferably at most 15 mass%, further preferably at most 10 mass%. When the ratio of other components is at most the upper limit value in the above range, the effects of the present invention will be less likely to be impaired.

### (Method for producing resin composition)

The resin composition can be produced by melt-kneading the fluororesin, the inorganic fibers, and, as the case requires, other components. The resin composition containing the melted fluororesin and inorganic fibers may be extruded into strands, and the strands may be cut and pelletized by a pelletizer.

The melt-kneading device is not particularly limited. The melt-kneading device may be equipped with a screw with high kneading effects. A single screw extruder or a twin screw extruder is preferred; a twin screw extruder is more preferred; and a twin screw extruder equipped with a screw with high kneading effects is particularly preferred.

As a screw with high kneading effects, one which provides sufficient kneading effects and does not apply an excessive shear force, may be selected. As the melt-kneading device, a Labo Plastomill kneader (manufactured by Toyo Seiki Seisaku-sho, Ltd.) or a KZW series twin-screw kneading extruder (manufactured by Technovel Corporation) may be mentioned.

As the method for supplying the inorganic fibers to the melt-kneading device, the inorganic fibers may be added before melt-kneading the fluororesin, or the inorganic fibers may be added after melt-kneading the fluororesin. However, from the viewpoint of mechanical properties, it is preferred to add the inorganic fibers after melt-kneading the fluororesin.

In a case of letting other components be contained in the resin composition, such other components may be added before melt-kneading the fluororesin, or other components may be added after melt-kneading the fluororesin.

The temperature at the time of melt-kneading the fluororesin is at least the melting point of the fluororesin, preferably at least the melting point of the fluororesin + 5°C and at most the melting point of the fluororesin + 100°C.

The extrusion shear rate at the time of melt-kneading the fluororesin and the residence time of the fluororesin in the melt-kneading device are not particularly limited, and known conditions may be optionally adopted. The extrusion shear rate is preferably set depending on the melt viscosity of the fluororesin at the melt-kneading temperature.

### (Advantageous effects)

In the resin composition as described above, the inorganic fibers are excellent in heat resistance, since the rate of change in mass of the inorganic fibers measured under specific conditions is at most 3%. Therefore, even when the fluororesin is melt-molded under such a high temperature that it shows flowability, the inorganic fibers are less likely to be deteriorated, and the strength properties and elastic modulus of the molded body will be high. Therefore, a molded body excellent in mechanical properties and having high elasticity can be obtained.

### (Applications)

The resin composition can be used, for example, as a raw material for a molded body. A molded body made from the resin composition of the present invention is excellent in mechanical properties and has high elasticity, whereby it is preferred to be used in applications where these properties are required.

In the following, examples of the applications of the molded body will be mentioned, but the following description is merely examples, and the applications of the molded body are not limited to the following examples.

As the applications of the molded body, a housing for a portable electronic device, a bonding member for portable electronic devices, a sliding member, a three-dimensional circuit component, a gear, an actuator, a piston, a bearing, an aircraft interior material, a bushing, a tube (for fuel, etc.), a hose, a tank, a seal, a wire, an insulation coating material for an electric wire (wire, cable, etc.), a film, a sheet, a bottle, fibers, etc. may be mentioned. Among them, a portable electronic device is used in a hand, whereby a liquid such as oil, a beverage, sweat or sebum contained in food or cosmetics, is likely to be attached. The molded body of the present invention is less likely to be discolored or degraded by such an attachment, and thus is suitably used in an application such as a housing or bonding member for portable electronic devices.

As the portable electronic device, for example, a cellular phone, a mobile terminal, a laptop computer, a tablet computer, a radio, a camera, a camera accessory, a watch, a calculator, a music player, a global positioning system receiver, a portable game, a hard drive, a portable recording device, a portable playback device, a portable radio receiver, etc. may be mentioned.

As the form of the housing of a portable electronic device, for example, a back cover, front cover, antenna housing, frame or backbone of a portable electronic device may be mentioned. The housing may be a member made up of a single component of the molded body of the present invention or a member made up of multiple components. Here, the backbone is a member to which the components of a portable electronic device, such as an electronic, microprocessor, screen, keyboard, keypad, antenna and battery socket, are attached.

In a case where the housing is located inside a portable electronic device, the housing may not be visible from outside the portable electronic device or may be partially visible from outside the portable electronic device. A housing such as a cover to protect or support an internal structure, may be exposed to the outside of the portable electronic device.

As the form of the bonding member for portable electronic devices, a circuit board, microphone, speaker, display, battery, covering, electrical connector, electronic connector, hinge, antenna, switch, or snap-on connector between switch pads, of a portable electronic device, may be mentioned. The bonding member can be suitably applied to portable electronic devices such as cellular phones, portable personal digital assistants (PDAs), music storage devices, eavesdroppers, portable DVD players, electric multimeters, portable electronic game machines, portable personal computers (e.g., notebook computers, etc.).

The three-dimensional circuit component is a component having a circuit pattern formed on the surface of a resin component molded into a three-dimensional shape, and is used as an antenna component for a portable electronic device, or a component for an in-vehicle electronic device. As the method for forming a circuit pattern, a laser direct structuring (LDS) method is used, in which the circuit pattern is etched by a laser, followed by plating. The molded body of the present invention is excellent in low dielectric properties and is suitably applied for a three-dimensional circuit component.

As applications for tubes, hoses, tanks, seals and wires, those described in WO2015/182702 may be mentioned. Further, as applications for tubes and hoses, tubes for drilling energy resources such as oil, natural gas and shale oil, may be mentioned. Among them, tubes for oil drilling is preferred. Further, as applications for tubes, medical catheters equipped with tubes, wire sheathing, and piping for analytical instruments are also preferred.

As applications for an insulation coating material for an electric wire, a wire for a motor coil or a flat copper wire, especially an insulation coating material for a flat conductor in a motor for driving a hybrid electric vehicle (HEV) or an electric vehicle (EV) may be mentioned. As the form of the insulation coating material for a flat conductor, a film is preferred. Further, as applications for an insulation coating material for an electric wire, an insulation coating material for a downhole cable used in drilling for energy resources (oil, natural gas, shale oil, etc.) may be mentioned. Among them, an insulation coating material for a downhole cable for oil drilling is particularly preferred.

As applications for a film or sheet, a speaker diaphragm, a plate for trauma and bone fractures, an insulation paper for adhesive tapes for various electrical insulation (e.g., an insulation paper for a motor), a sealing tape for oil or natural gas pipes, and a release film at the time of forming a thermosetting and thermoplastic composite material, may be mentioned. Particularly as applications for a film, a speaker diaphragm equipped with a film, a film for electrical wire sheathing, a flexible printed circuit board, a heat-resistant roll for office automation equipment, and a film for film impregnation of other fiber composite material, may be mentioned. The thickness of the film is preferably from 1 to 100 µm, more preferably from 2 to 80 µm, further preferably from 5 to 50 µm. When the thickness of the film is at least the lower limit value in the above range, the strength of the film will be improved. When the thickness of the film is at most the upper limit value in the above range, the handling efficiency of the film in the next process step will be excellent.

As applications for the fibers, protective clothing and various filters may be mentioned.

As the molding methods, for example, an injection molding method, an extrusion molding method, a co-extrusion molding method, a blow molding method, a compression molding method, a transfer molding method and a film molding method may be mentioned. However, the molding methods are not limited to these exemplifications.

### EXAMPLES

In the following, the present invention will be specifically described with reference to Examples, but the present invention is not limited to the following descriptions. Ex. 1, 3 to 5, 7 and 8 are Examples of the present invention, and Ex. 2 and 6 are Comparative Examples.

### <Measurement methods>

### (Content of functional groups f)

The ratio of monomer units having functional group f in a fluororesin was determined by the following infrared absorption spectrum analysis.

The fluororesin was press-formed to obtain a 200 µm film. In the infrared absorption spectrum of the film, the absorbance of the absorption peak derived from the monomer units having functional group f in the fluororesin was measured, and the ratio (mol%) of the monomer units having functional group f was determined.

In the infrared absorption spectrum, the absorption peaks of IAH units and NAH units in the fluororesin both appear at 1,778 cm⁻¹. The absorbance of these absorption peaks was measured, and by using the molar absorption coefficient 20,810 mol⁻¹ ·l·cm⁻¹ of IAH or NAH, the ratio (mol%) of IAH units or NAH units was obtained. When the aforementioned ratio is a (mol%), the number of functional groups f (acid anhydride groups) to 1×10⁶ main chain carbon atoms is calculated to be [a×10⁶/100] units.

### (Melting point)

Using a differential scanning calorimeter (DSC device, manufactured by Seiko Instruments Inc.), the melting peak was recorded when the polymer was heated at a rate of 10°C/min, and the temperature corresponding to the maximum value was taken as the melting point.

### (Melt flow rate)

Using a melt-indexer (manufactured by Technol Seven Co., Ltd.), the mass of a polymer flowing out of a nozzle of 2 mm in diameter and 8 mm in length in 10 minutes was measured under conditions of 297°C and 49 N load.

### (Mass loss rate)

Using TGDTA7200 manufactured by Seiko Instruments Inc., 12 mg of inorganic fibers was placed in an aluminum pan, the temperature was raised to 400°C at a rate of 10°C/min. in air as the measuring atmosphere, and then held at 400°C for 60 min. The mass after heating at 400°C for 60 min. was measured, and the mass loss rate was calculated from the following formula I. Mass loss rate [%] = ((mass [g] of inorganic fibers before heating) - (mass [g] of inorganic fibers after heating)) / (mass [g] of inorganic fibers before heating) × 100

### (Preparation of injection-molded body for evaluation)

Using an injection molding machine (ROBOSHOT α-50C, manufactured by Fanuc Corporation), a resin composition was injection-molded at a mold temperature of 100°C to obtain an injection molded body for evaluation with a thickness of 4.0 mm. The cylinder temperature of the injection molding machine was set at 340°C in Ex. 1 to 4 and at 290°C in Ex. 5 to 8.

### (Tensile test)

With respect to the injection-molded body for evaluation, using Tensilon (manufactured by A&D, model: RTF-1350), in accordance with JIS K7161, the tensile strength [MPa] and tensile elongation [%] were measured under conditions of a load cell rating of 10 kN, a distance between chucks of 115 mm, and a speed of 50 mm/min.

### (Bending test)

From the injection-molded body for evaluation, a test specimen of 80 mm in length and 10 mm in width was cut out. With respect to the test specimen, using Tensilon (A&D, RTF-1350), in accordance with JIS K7171, the flexural strength [MPa] and flexural modulus [Gpa] were measured under conditions of a load cell rating of 10 kN, a distance of 64 mm between fulcrum points, and a speed of 2 mm/min.

### (Impact resistance)

From the injection-molded body for evaluation, a test specimen of 80 mm in length and 10 mm in width was cut out. A notch was notched at a height of 40 mm in the injection-molded body for evaluation, to obtain a test specimen.

With respect to the test specimen, using an Izod test apparatus (manufactured by Toyo Seiki Seisaku-sho, Ltd.), the Izod impact strength [J/m] was measured under conditions of a hammer capacity of 2.75 J, a hammer load of 13.97 N, a distance from the center of gravity to the shaft center of 10.54 cm, and a distance from the center of gravity to the impact point of 33.5 cm. Measurements were conducted at 23°C.

### <Raw materials>

### (Fluororesin 1)

Fluororesin 1 having no functional groups f was purchased and used. Fluororesin 1 had TFE units and PPVE units, and TFE units/PPVE units = 98/2 (mol%). The melting point of fluororesin 1 was 305°C, and the melt flow rate was 36 g/10 min.

### (Fluororesin 2)

The synthesis was conducted in the same manner as in Example 5 of WO2015/182702 to obtain fluororesin 2. Fluoropolymer 2 had TFE units, PPVE units, and NAH units, and TFE units/PPVE units/NAH units = 97.9/2.0/0.1 (mol%). The melting point of fluororesin 2 was 300°C, and the melt flow rate was 22 g/10 min. The content of functional groups f was 1,000 groups to 1×10⁶ main chain carbon atoms of fluororesin 2.

### (Fluororesin 3)

Fluororesin 3 having no functional groups f was purchased and used. Fluororesin 3 had TFE units, ethylene units and PFBE units, and TFE units/ethylene units/PFBE units = 54/46/2 (molar ratio). The melting point of fluororesin 3 was 260°C, and the melt flow rate was 28.8 g/10 min.

### (Fluororesin 4)

The synthesis was conducted in the same manner as in Example 4 of WO2015/182702 to obtain fluororesin 4. Fluororesin 4 had TFE units, ethylene units, PFEE units and IAH units, and TFE units/ethylene units/PFEE units/IAH units = 60/40/2.2/0.5 (molar ratio). The melting point of fluororesin 4 was 240°C, and the melt flow rate was 17 g/10 min. The content of functional groups f was 1,000 groups to 1×10⁶ main chain carbon atoms of fluororesin 4.

### (Carbon fibers 1)

"PXCA0250-83", manufactured by ZOKTEK, was purchased and used as carbon fibers 1. The fiber length of carbon fibers 1 was 5.5 mm, and the mass change rate when heated at 400°C for 60 minutes, was 0.1%.

### (Carbon fibers 2)

"PXCA0250-45", manufactured by ZOLTEK, was purchased and used as carbon fibers 2. The fiber length of carbon fibers 2 was 5.5 mm, and the mass change rate when heated at 400°C for 60 minutes, was 3.9%.

### <Ex. 1 to 4>

Using a feeder, the fluororesin was fed into the base of the screw of a twin-screw extruder (manufactured by Technovel Corporation, KZW15TW-45MG-NH (-1100), screw diameter: 15 mmϕ, L/D: 45) to achieve the blend ratio shown in Table 1, and using a side feeder, the carbon fibers are fed from the middle of the twin-screw extruder barrel and kneaded under conditions of feed rate: 1.5 kg/hour, screw rotational speed: 100 rpm, cylinder, die and head temperature settings: C1 = 300°C, C2 = 320°C, C3 = 340°C, C4 = 340°C, C5 = 340°C, C6 = 340°C, and D = 340°C, whereupon the strands extruded from the tip of the die were cooled in a water bath and cut by a pelletizer to obtain pellets of resin composition, respectively. The measurement results in the respective Ex. are shown in Table 1.

<Ex. 5 to 8>

Pellets of resin compositions with the blend ratios shown in Table 1 were, respectively, obtained in the same manner as in Ex. 1 to 4, except that kneading was conducted under the following condition: cylinder, die, and head temperature settings: C1 = 285°C, C2 = 285°C, C3 = 285°C, C4 = 285°C, C5 = 285°C, C6 = 285°C and D = 290°C. The measurement results of the respective Ex. are shown in Table 1.

**[Table 1]**

| | Ex. 1 | Ex. 2 | Ex. 3 | Ex. 4 | Ex. 5 | Ex. 6 | Ex. 7 | Ex. 8 |
|---|---|---|---|---|---|---|---|---|
| Fluororesin 1 [mass%] | 80 | 80 | - | 64 | - | - | - | - |
| Fluororesin 2 [mass%] | - | - | 80 | 16 | - | - | - | - |
| Fluororesin 3 [mass%] | - | - | - | - | 80 | 80 | - | 64 |
| Fluororesin 4 [mass%] | - | - | - | - | - | - | 80 | 16 |
| Carbon fibers 1 [mass%] | 20 | - | 20 | 20 | 20 | - | 20 | 20 |
| Carbon fibers 2 [mass%] | - | 20 | - | - | - | 20 | - | - |
| Tensile strength [MPa] | 36 | 15 | 49.4 | 51 | 79.3 | 55 | 75.8 | 84 |
| Tensile elongation [%] | 8 | 5 | 5.6 | 5 | 4.9 | 3.5 | 7.2 | 6 |
| Flexural strength [MPa] | 59 | 35 | 73 | 74 | 110 | 85 | 110 | 124 |
| Flexural modulus [GPa] | 6.9 | 4.8 | 6.2 | 7.5 | 9.1 | 6.8 | 7.6 | 9.8 |
| Izod impact strength [J/m] | 96 | 97 | 231 | 140 | 163 | 158 | 285 | 199 |

The molded bodies of the resin compositions in Ex. 1, 3 and 4 had higher tensile strength and flexural strength and better mechanical properties as compared to Ex. 2. Further, the flexural modulus was also higher as compared to Ex. 2, whereby highly elastic molded bodies were obtained.

Similarly, the molded bodies of the resin compositions in Ex. 5, 7 and 8 had better mechanical properties and higher elasticity as compared to Ex. 6.

In Ex. 3 and 4, in which fluororesin 2 having functional groups f was used, molded bodies with even higher tensile strength and flexural strength and even better mechanical properties were obtained as compared to Ex. 1. Further, in Ex. 3 and 4, Izod impact strength was also higher as compared to Ex. 1, and molded bodies excellent also in impact resistance were obtained.

In Ex. 7 and 8, in which fluororesin 4 having functional groups f was used, Izod impact strength was also higher as compared to Ex. 6, and molded bodies excellent also in impact resistance were obtained.

### INDUSTRIAL APPLICABILITY

According to the present invention, it is possible to provide a resin composition excellent in mechanical properties and capable of obtaining a molded body with high elasticity, and a molded body excellent in mechanical properties and having high elasticity.

The entire disclosure of Japanese Patent Application No. 2021-116990, filed on July 15, 2021 including specification, claims and summary is incorporated herein by reference in its entirety.

## Claims

1. A resin composition comprising a melt-moldable fluororesin and inorganic fibers, wherein the ratio of the fluororesin to the sum of the fluororesin and the inorganic fibers is from 60 to 95 mass%; the inorganic fibers are inorganic fibers, of which at least a portion of the surface is treated with a sizing agent; and the mass loss ratio of the inorganic fibers, as calculated by the following method, is at most 3%:
Method for calculating the mass loss ratio: The inorganic fibers are heated at 400°C for 60 minutes in the presence of air, and the mass loss ratio is calculated based on the following formula (I): Mass loss ratio (%) = ((mass [g] of inorganic fibers before heating) - (mass [g] of inorganic fibers after heating)) / (mass [g] of inorganic fibers before heating) × 100

2. The resin composition according to Claim 1, wherein the composition further contains components other than the fluororesin and the inorganic fibers, and the content of such components is at most 20 mass% to the resin composition.

3. The resin composition according to Claim 1 or 2, wherein the inorganic fibers are glass fibers or carbon fibers.

4. The resin composition according to any one of Claims 1 to 3, wherein the average fiber length of the inorganic fibers is from 100 µm to 30 mm.

5. The resin composition according to any one of Claims 1 to 4, wherein the fluororesin has functional groups selected from the group consisting of carbonyl group-containing groups, hydroxy groups, epoxy groups, amide groups, amino groups and isocyanate groups.

6. The resin composition according to any one of Claims 1 to 5, wherein the fluororesin is a polymer having units based on tetrafluoroethylene, a copolymer having units based on tetrafluoroethylene and units based on ethylene, a copolymer having units based on chlorotrifluoroethylene and units based on ethylene, a copolymer having units based on tetrafluoroethylene and units based on hexafluoropropylene, a copolymer having units based on tetrafluoroethylene and units based on a compound represented by the following formula (1), or a copolymer having units based on tetrafluoroethylene, units based on a compound represented by the following formula (2) and units based on ethylene:
CF₂=CFOR^{f1} (1)
CH₂=CX¹(CF₂)_{P}X² (2)
where in the formula (1), R^{f1} is a C₁₋₁₀ perfluoroalkyl group which may contain an etheric oxygen atom between carbon atoms, and in the formula (2), X¹ is a hydrogen atom or a fluorine atom, p is an integer of from 2 to 10, and X² is a hydrogen atom or a fluorine atom.

7. The resin composition according to Claim 6, wherein the fluororesin is a copolymer having units based on tetrafluoroethylene and units based on ethylene, a copolymer having units based on tetrafluoroethylene and units based on a compound represented by the above formula (1), or a copolymer having units based on tetrafluoroethylene, units based on a compound represented by the above formula (2) and units based on ethylene.

8. The resin composition according to Claim 6 or 7, wherein the fluororesin is a polymer having units based on a monomer having a functional group selected from the group consisting of a carbonyl group-containing group, a hydroxy group, an epoxy group, an amide group, an amino group and an isocyanate group.

9. The resin composition according to Claim 8, wherein the polymer having units based on a monomer having the above functional group is a polymer having units based on a monomer having a carboxy group, an acid anhydride group, a hydroxy group or an epoxy group.

10. A method for producing the resin composition as defined in any one of Claims 1 to 9, which comprises melt-kneading the fluororesin and the inorganic fibers.

11. A molded body obtainable by molding the resin composition as defined in any one of Claims 1 to 9.
